# EUROPÄISCHE PATENTSCHRIFT

(11) **EP 3 990 344 B1**
(45) Veröffentlichungstag und Bekanntmachung des Hinweises auf die Patenterteilung: **21.02.2024**
(21) Anmeldenummer: 20753668.1
(22) Anmeldetag: 05.06.2020
(51) Int. Cl.: B64C 1/14, B64D 45/00

(54) **VORRICHTUNG ZUM VERHINDERN DES ZUTRITTS ZU EINEM BEREICH EINES FLUGZEUGES**
DEVICE FOR PREVENTING ACCESS TO AN AREA ON AN AIRCRAFT
DISPOSITIF POUR EMPÊCHER L'ACCÈS À UNE ZONE D'UN AVION

(30) Priorität: 25.06.2019 DE 102019117055
(43) Veröffentlichungstag der Anmeldung: 04.05.2022
(73) Patentinhaber: Schroth Safety Products GmbH, 59757 Arnsberg (DE)
(72) Erfinder: REINCK, Wilko, 59505 Bad Sassendorf (DE); BACH, Stefan, 59757 Arnsberg (DE); HÖHN, Mike, 59505 Bad Sassendorf (DE)
(74) Vertreter: Griepenstroh, Jörg
(86) Internationale Anmeldenummer: PCT/DE2020/100475
(87) Internationale Veröffentlichungsnummer: WO 2020/259748

(56) Entgegenhaltungen:
- WO-A1-84/01404
- WO-A1-03/057563
- DE-A1-102014 104 921
- US-A1- 2003 136 878
- US-A1- 2006 000 946

## Beschreibung

Die Erfindung betrifft eine Vorrichtung zum Verhindern des Zutritts zu einem Bereich eines Flugzeuges gemäß den Merkmalen im Oberbegriff des Patentanspruchs 1.

Es ist unvermeidbar, dass bei langen Flügen Crewmitglieder die Cockpittür öffnen müssen, sei es für einen Toilettengang oder um der Flugcrew eine Mahlzeit zu reichen. Das Öffnen der gesicherten Cockpittür ist ein Sicherheitsrisiko. Es gibt verschiedene Methoden das Cockpit zu schützen, wenn die Cockpittür während des Fluges geöffnet werden muss. Der Zugangsbereich kann von den Crewmitgliedern beobachtet werden. Es können sich weitere Crewmitglieder in den Weg stellen. Der Weg kann auch mit einem Küchenwagen blockiert werden. Alternativ werden zusätzliche Barrieren montiert, sogenannte Secondary Barriers. Durch sie kann ein höheres Sicherheitslevel erreicht werden als durch improvisierte, nicht fest installierte Barrieren z.B. Küchenwagen oder auch im Vergleich zu rein menschlichen Barrieren.

Beispiele solcher Secondary-Barriers sind in der US 2006/0000946 A1, der US 2003/0136878 A1 sowie der US 8925863 B2 beschrieben.

Die WO 03/057563 A1 offenbart eine Vorrichtung zum Verhindern des Zutritts zu einem Bereich eines Flugzeuges, bei welchem eine Art Vorhang, der boden- und deckenseitig geführt wird, im Abstand vor einer Cockpittür aufgespannt wird. Dadurch wird eine Sicherheitszone für eine Person geschaffen, die sich unmittelbar vor der Cockpittür befindet. Wird diese Person als Mitglied der Flugzeugbesatzung identifiziert, kann die Cockpittür geöffnet werden. Die Piloten haben die komplette Kontrolle über das Vorhang-System und müssen jeden einzelnen Durchgang durch den Vorhang bestätigen.

Die US 2003/0136878 A1 offenbart ein weiteres System zum Verhindern des Zutritts zu einem Bereich eines Flugzeuges, bei welchem die Barriere vor einem Toilettenraum angebracht wird und geschlossen wird, wenn ein Pilot die Toilettenräume aufsucht.

Aus der DE 10 2014 104 921 A1 ist ein Haltesystem für eine bewegliche Komponente an Bord eines Flugzeuges bekannt. Die bewegliche Komponente kann eine Tür sein. Es wird vorgeschlagen, bewegliche Riegelelemente an der Tragstruktur und nicht an der Tür anzuordnen, weil dies den Vorteil hat, dass auch verstärkte Riegelelemente vorgesehen werden können, die beim Öffnen bzw. Bewegen der Tür nicht mit bewegt werden müssen. Hierdurch kann eine höhere Kraftübertragung erreicht werden und die Beweglichkeit der Tür erleichtert werden. Zur Vereinfachung kann zunächst eine einschnappende Türfalle als Sekundärverriegelung vorgesehen sein, während eine mechanisch betätigte Verriegelung als höher belastbare Primärverriegelung anschließend betätigt wird.

Allen Lösungen ist gemeinsam, dass der Cockpitcrew genügend Zeit verschafft werden soll, die Cockpittür wieder zu verschließen. Die sogenannte Secondary Barrier soll daher vorzugsweise nicht schnell zu öffnen sein, sodass genügend Zeit bleibt die Cockpittür zu verschließen. Beispielweise soll ein 100 kg Mann für mindestens 5 Sekunden aufgehalten werden, bevor er die Cockpittür erreicht.

Eine solche Vorrichtung zum Verhindern des Zutritts zu einem Bereich eines Flugzeuges muss diverse Anforderungen erfüllen: Insbesondere soll sie nicht stören, wenn das Flugzeug am Boden ist, gleichzeitig soll sie sicher und möglichst einfach nachrüstbar sein. Zudem soll sie leicht sein und bei Nichtgebrauch möglichst wenig Platz beanspruchen und möglichst wenig in den Durchgangsbereich vorstehen, wenn sie nicht benötigt wird.

Der Erfindung liegt die Aufgabe zugrunde eine Vorrichtung aufzuzeigen, die einfach in der Handhabung ist und insbesondere die weiteren, oben genannten Anforderungen erfüllt.

Diese Aufgabe ist bei einer Vorrichtung mit den Merkmalen des Patentanspruchs 1 gelöst.

Die Unteransprüche betreffen vorteilhafte Weiterbildungen der Erfindung.

Die erfindungsgemäße Vorrichtung zum Verhindern des Zutritts zu einem Bereich eines Flugzeuges besitzt einen ersten senkrechten Rahmenpfosten und einen zweiten senkrechten Rahmenpfosten. Sie werden an der Struktur des Flugzeugs befestigt. Ferner umfasst die erfindungsgemäße Vorrichtung ein Barrierenelement. Das Barrierenelement ist mit dem ersten Rahmenpfosten verlagerbar verbunden. Es ist mit dem zweiten Rahmenpfosten lösbar koppelbar. Hierzu dient wenigstens ein Verriegelungselement. Wenn das Barrierenelement lösbar mit dem zweiten Rahmenpfosten verbunden ist, wird der Zutritt zu dem zu schützenden Bereich bereits verhindert. Das Aufspannen des Barrierenelements bzw. das Schließen des Durchgangs zwischen den Rahmenpfosten geht einfach und schnell. Dahingegen soll das Öffnen nur zeitverzögert möglich sein. Die Erfindung sieht eine einer Entriegelungsbewegung entgegenwirkende Verzögerungseinheit vor. Die Verzögerungseinheit ist dazu ausgebildet, das wenigstens eine Verriegelungselement nach einer Zeitverzögerung freizugeben. Die Zeitverzögerung ist so bemessen, dass das Barrierenelement vor Ablauf der Zeitverzögerung nicht von dem zweiten Rahmenpfosten gelöst werden kann.

Die Verzögerungseinheit weist einen federbelasteten Dämpfungszylinder auf. Ein solcher Dämpfungszylinder, der als Kolben-Zylindereinheit bezeichnet werden kann, besitzt einen insbesondere mit einem Hydraulikfluid gefüllten Zylinder, mit in Zug- und Druckrichtung unterschiedlichen Dämpfungseigenschaften. Der Dämpfungszylinder ist durch eine Verriegelungsbewegung gegen eine Federkraft in eine Dämpfungsposition verlagerbar. Durch die Verriegelungsbewegung wird eine Feder vorgespannt, sodass die Federkraft aufgebaut oder erhöht wird. Die Federkraft kann eine Druckkraft sein. Die Federkraft wirkt der Verriegelungsbewegung entgegen. Die Richtung der Federkraft ist entgegengesetzt zur Richtung der Verriegelungsbewegung. Ein Federelement für die Federkraft, insbesondere eine Schraubendruckfeder kann an einem Widerlager des Barrierenelements oder dem Dämpfungszylinder abgestützt sein. Insbesondere befindet sich innerhalb der Feder eine Kolbenstange des Dämpfungszylinders. Dadurch wird Bauraum gespart und die Feder gleichzeitig geführt.

Die Verzögerungseinheit kann eine sehr geringe Baugröße besitzen und insbesondere sehr schlank sein. Das hat zum Vorteil, dass an dem zweiten Rahmenpfosten so gut wie keine vorstehenden Bauteile erforderlich sind.

Wenn das Barrierenelement zusätzlich so verstaut werden kann, dass es möglichst nicht in den Durchgangsbereich ragt, benötigt die gesamte Vorrichtung in der Offenstellung nur sehr wenig Bauraum in der Flugzeugkabine.

Zudem ist es mit der Erfindung möglich, sehr schnell eine Barriere aufzubauen. Die Verzögerungseinheit wirkt hierfür insbesondere nur in eine Richtung, nämlich entgegengesetzt der Entriegelungsbewegung. Bei einer linearen Verriegelungsbewegung von oben nach unten wirkt die Verzögerungseinheit noch nicht zeitverzögernd. Erst beim Entriegeln, d. h., wenn die Verriegelungselemente wieder freigegeben werden sollen, wirkt die Verzögerungseinheit der Entriegelungsbewegung entgegen, insbesondere für eine Dauer von mindestens 5 Sekunden, und je nach Bedarf auch für 30 Sekunden, 1 Minute oder auch länger. Die Verzögerungseinheit ist austauschbar und anpassbar.

Während im Stand der Technik vorgeschlagen wird, Verriegelungseinheiten nicht leicht erreichbar z. B. bodennah zu platzieren oder nach dem Prinzip Hebel in einer Box, in einer weiteren Box, einer weiteren Box, etc., um auf diese Weise den Öffnungsvorgang zu verzögern, übernimmt diese Aufgabe bei der Erfindung eine Verzögerungseinheit, die in einer ersten Ausführung in das Barrierenelement integriert ist. Das Barrierenelement ist gegenüber dem zweiten Rahmenpfosten verlagerbar. Dadurch kann mittels des Barrierenelements gegenüber dem zweiten Rahmenpfosten eine Verriegelungsbewegung ausgeführt werden, um das Barrierenelement lösbar mit dem zweiten Rahmenpfosten zu verbinden. Der zweite Rahmenpfosten kann gewissermaßen als Schließblech ausgestaltet sein. Er dient dazu, das wenigstens eine Verriegelungselement, das von dem Barrierenelement vorsteht, aufzunehmen.

Die Verzögerungseinheit kann beim Verriegeln mit einer Ratsausnehmung am ersten Rahmenpfosten in Eingriff stehen. An der Verzögerungseinheit kann eine Rastnase angeordnet sein, die in die Rastausnehmung fasst. Die Verzögerungseinheit wird zusammen mit der Rastnase relativ zur Rastausnehmung bewegt. Die Rastnase wird nach oben gedrückt, wenn das Barrierenelement um z.B.30 mm abgesenkt wird. Durch die Rastnase wird die Kolbenstange des Dämpfungszylinders entgegen der Federkraft aus dem Dämpfungszylinder herausgezogen. Ein Federelement für die Federkraft, insbesondere eine Schraubendruckfeder kann hierfür an einem Widerlager des Barrierenelements abgestützt sein.

Nachdem die Verzögerungseinheit entgegen der Federkraft in die Dämpfungsposition verlagert worden ist, soll das Barrierenelement in dieser Position verharren, bevor es wieder freigegeben wird. Daher ist es von Vorteil, wenn das Barrierenelement durch ein zwischen dem Barrierenelement und dem zweiten Rahmenpfosten wirksames Riegelelement in der Verriegelungsstellung arretierbar ist. Das Riegelelement ist insbesondere linear verschiebbar. Es ist bevorzugt in oder an dem Barrierenelement angeordnet und kann in eine Riegelöffnung in dem zweiten Rahmenpfosten greifen. Das Riegelelement kann federbelastet sein und entgegen einer Federkraft in eine Verriegelungsstellung verlagert werden. Zum Entriegeln kann ein Sperrelement das Riegelelement freigeben, das anschließend unter dem Einfluss der Federkraft wieder in seine offene Ausgangsposition zurückgeschoben wird. Denkbar ist auch, dass auf das Riegelelement permanent eine Federkraft wirkt, die das Riegelelement in eine Schließstellung drückt. In diesem Fall muss das Riegelelement zum Entriegeln gegen die Federkraft aktiv zurückgezogen werden, um das Barrierenelement von dem zweiten Rahmenpfosten zu lösen.

In einer weiteren vorteilhaften Ausgestaltung der Erfindung ist das Barrierenelement eine flexible Barriere, die einen Barrierenpfosten aufweist. Der Barrierenpfosten ist das Element, das mit dem zweiten Rahmenpfosten verbunden werden soll. Der Barrierenpfosten ist insbesondere starr, während die Barriere flexibel ist. Es handelt sich bei der flexiblen Barriere insbesondere um ein textiles Material, insbesondere um ein Netz oder Gewebe. Diese flexible Barriere kann aufgerollt, gefaltet oder geknickt werden und dadurch auf engstem Bauraum verstaut werden.

Der Barrierenpfosten weist vorzugsweise das wenigstens eine Verriegelungselement, z. B. mindestens einen vorstehenden Zapfen mit einer endseitigen Verdickung sowie die Verzögerungseinheit auf. Die Verzögerungseinheit in Form eines Dämpfungszylinders kann in Längsrichtung des Barrierepfostens angeordnet sein, ebenso wie das Federelement zur Rückstellung der Verzögerungseinheit. Die Verriegelungselemente stören an dem Barrierepfosten nicht, wenn dieser bei Nichtgebrauch platzsparend verstaut worden ist. Bevorzugt sind mehrere Verriegelungselemente z. B. 3 - 5 über die Höhe des Barrierepfostens verteilt angeordnet.

Um die Handhabung der erfindungsgemäßen Vorrichtung zu vereinfachen, kann der Barrierenpfosten in seinem Fußbereich eine seitliche hervorstehende Konsole aufweisen für eine Verriegelungsbewegung mittels Fußbetätigung. Die Fußbetätigung gestattet es, eine relativ hohe Kraft durch das eigene Körpergewicht aufzubringen. Auf diese Art und Weise kann die Federkraft, die der Verriegelungsbewegung entgegenwirkt, sehr leicht überwunden werden und das Barrierenelement kann am zweiten Pfosten eingerastet werden.

In einer weiteren vorteilhaften Ausgestaltung der Erfindung, ist die Verzögerungseinheit in dem zweiten Rahmenpfosten angeordnet.

Die Verzögerungseinheit kann in diesem Fall mit einem Verschlusskörper verbunden sein, welcher ein Betätigungselement aufweist und innerhalb des zweiten Rahmenpfostens in Längsrichtung verschieblich angeordnet ist. Beim Verriegeln kann der Verschlusskörper zusammen mit der Verzögerungseinheit relativ zum zweiten Rahmenpfosten durch das Betätigungselement manuell verschoben werden. Durch eine Verschiebung in Längsrichtung, insbesondere von oben nach unten, wird die Kolbenstange des Dämpfungszylinders entgegen der Federkraft, welche zur Rückstellung der Verzögerungskraft dient, im Dämpfungszylinder bewegt. Ein Federelement für die Federkraft, insbesondere eine Schraubendruckfeder kann an dem Dämpfungszylinder abgestützt sein.

Nachdem die Verzögerungseinheit entgegen der Federkraft in die Dämpfungsposition verlagert worden ist, soll der Verschlusskörper in dieser Position verharren, bevor er wieder freigegeben wird. Daher ist es von Vorteil, wenn der Verschlusskörper durch ein zwischen dem Verschlusskörper und dem zweiten Rahmenpfosten wirksames Riegelelement in der Verriegelungsstellung arretierbar ist. Das Riegelelement ist insbesondere linear verschiebbar. Es ist bevorzugt in oder an dem Verschlusskörper angeordnet und kann in eine Riegelöffnung in dem zweiten Rahmenpfosten greifen. Das Riegelelement kann federbelastet sein und entgegen einer Federkraft in eine Verriegelungsstellung verlagert werden. Zum Entriegeln kann ein Sperrelement das Riegelelement freigeben, das anschließend unter dem Einfluss der Federkraft wieder in seine offene Ausgangsposition zurückgeschoben wird. Denkbar ist auch, dass auf das Riegelelement permanent eine Federkraft wirkt, die das Riegelelement in eine Schließstellung drückt. In diesem Fall muss das Riegelelement zum Entriegeln gegen die Federkraft aktiv zurückgezogen werden, um den Verschlusskörper von dem zweiten Rahmenpfosten zu lösen.

Wenn die Verzögerungseinheit in dem zweiten Rahmenpfosten angeordnet ist, kann das Barrierenelement ebenfalls eine flexible Barriere, die einen Barrierenpfosten aufweist, sein. Der Barrierenpfosten ist das Element, das mit dem Verschlusskörper in dem zweiten Rahmenpfosten verbunden werden soll. Der Barrierenpfosten ist insbesondere starr, während die Barriere flexibel ist. Es handelt sich bei der flexiblen Barriere insbesondere um ein textiles Material, insbesondere um ein Netz oder Gewebe. Diese flexible Barriere kann aufgerollt, gefaltet oder geknickt werden und dadurch auf engstem Bauraum verstaut werden. Der Barrierenpfosten weist vorzugsweise das wenigstens eine Verriegelungselement, z. B. mindestens einen vorstehenden Zapfen mit einer endseitigen Verdickung sowie die Verzögerungseinheit auf. Vor der eigentlichen Verriegelungsbewegung wird das Barrierenelement in den Verschlusskörper eingeschoben. Die Verriegelungselemente stören an dem Barrierepfosten nicht, wenn dieser bei Nichtgebrauch platzsparend verstaut worden ist. Bevorzugt sind mehrere Verriegelungselemente z. B. 3 - 5 über die Höhe des Barrierepfostens verteilt angeordnet.

Es wird als besonders vorteilhaft angesehen, wenn die Richtung der Verriegelungsbewegung parallel zu dem zweiten Rahmenpfosten ist. Insbesondere wird die Verriegelungsbewegung von oben nach unten durchgeführt, entgegen der Schwerkraft. Die Verriegelungsbewegung erfolgt über 20 bis 50 mm.

Es wird als besonders vorteilhaft angesehen, wenn das wenigstens eine Verriegelungselement nach dem Prinzip einer Pilzkopfverriegelung in der Schließstellung Kanten einer Öffnung hintergreift. Die Öffnung befindet sich entweder an dem zweiten Rahmenpfosten oder an dem Verschlusskörper. Die Öffnung kann einstückiger Bestandteil des Rahmenpfostens oder des Verschlusskörpers sein. Ein Verriegelungselement in Form eines Zapfens, mit einem im Querschnitt verdickten Kopf kann in die Öffnung eingeführt werden, die zu diesem Zweck an einem Ende verbreitert ist, um den verdickten Kopf des Zapfens aufzunehmen. Durch die Verriegelungsbewegung parallel zum zweiten Rahmenpfosten gelangt der verdickte Kopf hinter die Kanten der Öffnung, durch welche nur noch der Schaft des Zapfens greift. Dadurch kann das Barrierenelement nicht mehr in Richtung zum ersten Türpfosten verlagert werden. Das so gehaltene Verriegelungselement wird in der Schließposition durch das Riegelelement fixiert, welches eine Verlagerung des Barrierepfostens oder des Verschlusskörpers verhindert.

In einer Weiterbildung der Erfindung ist an dem ersten Rahmenpfosten ein Rahmenoberteil angeordnet, das nach oben in Richtung zum zweiten Rahmenpfosten schwenkbar ist. Das Rahmenoberteil dient zur Führung einer Oberkante der flexiblen Barriere bzw. zur Führung des Barrierenpfostens von dem ersten Rahmenpfosten zum zweiten Rahmenpfosten. Vorzugsweise ist das Rahmenoberteil mit dem zweiten Rahmenpfosten koppelbar. Es kann sich um eine formschlüssige Verbindung handeln, z. B., indem der zweite Rahmenpfosten einen Vorsprung aufweist, der von dem Rahmenoberteil übergriffen wird. Auch die umgekehrte Konfiguration ist denkbar.

Das Verschwenken erfolgt um eine horizontale Schwenkachse, sodass das Rahmenoberteil bei Nichtgebrauch auf die eingefahrene, flexible Barriere heruntergeschwenkt werden kann. Die Barriere kann durch das heruntergeschwenkte Rahmenoberteil bei Nichtgebrauch an dem ersten Rahmenpfosten gehalten sein.

In einer Weiterbildung der Erfindung ist an dem ersten Rahmenpfosten ein Rahmenunterteil angeordnet. Das Rahmenunterteil kann auch als Schwelle bezeichnet werden. Dieses Rahmenunterteil ist nach unten in Richtung zum zweiten Rahmenpfosten verschwenkbar. Das Rahmenunterteil dient zum Schutz des Bodens kann aber auch zur Führung der Unterseite des Barrierenpfostens und der flexiblen Barriere dienen. Damit das Rahmenunterteil bei Nichtgebrauch keine Stolperfalle darstellt, kann auch das Rahmenunterteil bei Nichtgebrauch wieder in Richtung zum zweiten Rahmenpfosten verschwenkt werden. Genau wie das Rahmenoberteil kann das Rahmenunterteil die flexible Barriere bei Nichtgebrauch an dem ersten Rahmenpfosten halten.

Das Rahmenunterteil ist insbesondere mit dem zweiten Rahmenpfosten koppelbar. Die Koppelung kann durch gegenseitigen formschlüssigen Eingriff erfolgen. Hierfür ist entweder ein Vorsprung am Rahmenunterteil angeordnet, der in einer Ausnehmung am Rahmenpfosten fast, oder der Rahmenpfosten weist einen Vorsprung auf, der in eine Aussparung am Rahmenunterteil fasst.

Nach dem Öffnen der Vorrichtung, d. h. dem Zurückziehen der flexiblen Barriere kann das Rahmenunterteil wieder angehoben werden. Hierzu kann an dem Rahmenunterteil ein Band oder ein Gurt angeordnet sein, sodass sich ein Bediener nicht nach dem Rahmenunterteil bücken muss. In gleicherweise kann auch das Rahmenoberteil mit einem Band oder einem Gurt versehen sein, um das Rahmenoberteil zu greifen und herunterzuziehen.

Das Rahmenunterteil und das Rahmenoberteil erhöhen signifikant die Sicherungsfunktion der erfindungsgemäßen Vorrichtung, da ein Übergreifen oder Untergreifen der Barriere durch die Führungen an den Rahmenober- und -unterteilen verhindert wird.

In einer Weiterbildung der Erfindung ist vorgesehen, dass das Rahmenoberteil mit einem Hubzylinder verbunden ist, welcher eine Kraft auf das Rahmenoberteil ausübt, um es in einer Offenstellung zu halten. Der Hubzylinder ist insbesondere mit dem ersten Rahmenpfosten verbunden. Wenn das obere Rahmenteil aus der herabgeschwenkten Position gelöst wird, kann der Hubzylinder, insbesondere ein Gasdruckzylinder, das Rahmenoberteil nach oben drücken und mit dem gegenüberliegenden Rahmenpfosten verriegeln. Vorher kann das Barrierenelement nicht bewegt werden. Nach dem Öffnen der erfindungsgemäßen Vorrichtung fällt das Rahmenoberteil nicht herunter, weil der Hubzylinder es oben hält. Der Hubzylinder wird eingefahren, wenn das Rahmenoberteil manuell wieder nach unten verschwenkt wird. Die hierzu notwendige Kraft kann mittels einer Handhabe, beispielsweise mittels eines Bandes oder Gurtes, das am Rahmenoberteil befestigt ist, aufgebracht werden.

Vorzugsweise ist der erste Rahmenpfosten mit einem Behälter versehen, in welchem die flexible Barriere bei Nichtgebrauch angeordnet ist. Die Barriere kann insbesondere aufgerollt oder gefaltet werden und sehr platzsparend in einem hohen und schlanken Behälter untergebracht werden. Der Behälter nimmt gleichzeitig auch den Rahmenpfosten auf. Er kann einen Deckel oder ein Schließelement aufweisen, das verhindert, dass die Barriere sich selbsttätig aus dem Behälter löst. Gleichzeitig kann der Behälter über das Rahmenoberteil bzw. Rahmenunterteil verschlossen sein. Es ist auch denkbar, dass das Rahmenoberteil und das Rahmenunterteil mindestens eine Wand des Behälters bilden.

Je nach örtlichen Gegebenheiten kann der Behälter um eine Vertikalachse schwenkbar an den Rahmenpfosten gelagert sein. Die Örtlichkeiten in einem Flugzeug gestatten es unter Umständen nicht, einen Rahmenpfosten mit einem Behälter in einem Durchgang anzuordnen. Denkbar ist aber, einen solchen Rahmenpfosten in einem Eckbereich außerhalb des Durchgangs anzuordnen. Er liegt dann allerdings dem zweiten Rahmenpfosten nicht unmittelbar gegenüber. Durch einen Behälter der um eine Vertikalachse schwenkbar an den Rahmenpfosten gelagert ist, kann der Behälter bei Nichtgebrauch platzsparend außerhalb des Durchganges positioniert sein und nur dann, wenn die Barriere aufgebaut werden soll, in den Durchgang verschwenkt werden.

Die Erfindung wird nachfolgend anhand von den in rein schematischen Zeichnungen dargestellten Ausführungsbeispielen erläutert. Es zeigen:
- Figur 1: Einen Querschnitt durch den Frontbereich eines Flugzeugs mit der erfindungsgemäßen Vorrichtung;
- Figur 2: Die erfindungsgemäße Vorrichtung in geschlossener Position in einer ersten Ansicht;
- Figur 3: Die erfindungsgemäße Vorrichtung in einer halboffenen Position;
- Figur 4: Die erfindungsgemäße Vorrichtung der Figuren 2 und 3 in einer geöffneten Position;
- Figur 5: In einer Seitenansicht einen Teilbereich des zweiten Rahmenpfostens und des Barrierepfostens im Längsschnitt;
- Figur 6: Eine Ansicht auf die Anordnung der Figur 5 in Richtung des Pfeils VI;
- Figur 7: Im Längsschnitt einen Teilbereich des zweiten Rahmenpfostens und des Barrierenelements während der Verriegelungsphase in einer Zwischenposition;
- Figur 8: Die Anordnung der Figur 7 in Richtung des Pfeils VIII im Längsschnitt;
- Figur 9: Einen Teilbereich des zweiten Rahmenpfostens im Längsschnitt in der Verriegelungsposition;
- Figur 10: Eine Ansicht auf die Anordnung der Figur 9 in Richtung des Pfeils X im Längsschnitt;
- Figur 11: In einer Seitenansicht einen Teilbereich des zweiten Rahmenpfostens und des Barrierenpfostens im Längsschnitt gemäß einer zweiten Ausführung;
- Figur 12: Eine Ansicht auf die Anordnung der Figur 11 in Richtung des Pfeils XII;
- Figur 13: Im Längsschnitt einen Teilbereich des zweiten Rahmenpfostens und des Barrierenpfostens gemäß der zweiten Ausführung während der Verriegelungsphase in einer Zwischenposition;
- Figur 14: Einen Teilbereich des zweiten Rahmenpfostens und des Barrierenpfostens gemäß der zweiten Ausführung im Längsschnitt in der Verriegelungsposition;
- Figur 15: Eine Ansicht im Längsschnitt eines Riegelelementes in verriegelter Position und
- Figur 16: eine Ansicht im Längsschnitt des Riegelelementes in geöffneter Position.

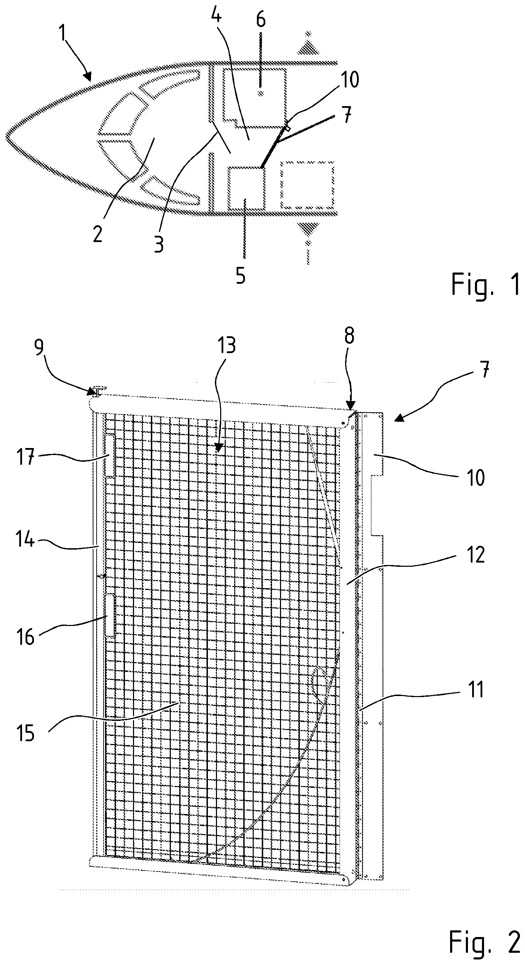

Die Figur 1 zeigt einen Teilbereich eines Flugzeugs 1 mit einem Cockpit 2 und mit einer Cockpittür 3, die einen Durchgang 4 zwischen einem WC-Raum 5 und einer Bordküche 6 trennt. Die erfindungsgemäße Vorrichtung 7 ist diagonal zwischen den Eckbereichen des WCs 5 und der Bordküche 6 angeordnet. Die Darstellung der Figur 2 zeigt die erfindungsgemäße Vorrichtung 7. Sie sperrt den Zutritt zu dem Durchgang 4 bzw. zu dem Cockpit 2 während die Cockpittür 3 geöffnet ist. Die erfindungsgemäße Vorrichtung besitzt einen ersten senkrechten Rahmenpfosten 8 und im Abstand zu dem ersten Rahmenpfosten 8 einen zweiten senkrechten Rahmenpfosten 9. Die beiden Rahmenpfosten 8, 9 sind mit der Struktur des Flugzeuges verbunden, d. h. in dem Ausführungsbeispiel der Figur 1 einerseits mit dem WC-Raum 5 andererseits mit einer Wand der Bordküche 6. Der erste senkrechte Rahmenpfosten 8 ist zweiteilig aufgebaut. Er besitzt einen Befestigungsabschnitt 10. Dieser Befestigungsabschnitt 10 ist mit der Wand der Bordküche 6 zu verbinden. Über ein Gelenk 11 in Form eines Scharnierbandes ist der zweite Teil des Rahmenpfostens mit dem Befestigungsabschnitt 10 verbunden. Der zweite Teil des Rahmenpfostens 8 ist ein Behälter 12, in dem ein Barrierenelement 13 untergebracht werden kann. Das Barrierenelement 13 in Figur 2 ist aufgespannt zwischen dem ersten Rahmenpfosten 8 und dem zweiten Rahmenpfosten 9. Das Barrierenelement 13 ist mit dem ersten Rahmenpfosten 8 verlagerbar verbunden. Es ist an dem ersten Rahmenpfosten 8 befestigt. Zum Schließen des Durchgangs 4 kann es mit dem zweiten Rahmenpfosten 9 lösbar verbunden werden.

Das Barrierenelement 13 besitzt hierzu einen Barrierenpfosten 14. Der Barrierenpfosten 14 besteht insbesondere aus einem leichten aber festen Material, beispielsweise aus Aluminium. Die zwischen dem Barrierenpfosten 14 und dem Behälter 12 des ersten Rahmenpfosten 8 angeordnete Barriere 15 besteht in diesem Fall aus einem widerstandsfähigen Netz. In der Barriere 15 ist ein Handgriff 16 angeordnet, um den Barrierenpfosten 14 zu greifen und um das Barrierenelement 13 in den zweiten Rahmenpfosten 9 einzuhängen. Im oberen Bereich der Barriere 15 befindet sich eine Durchgriffsöffnung 17, um auf der gegenüberliegenden Seite des Barrierenelements 13 ein Bedienelement betätigen zu können.

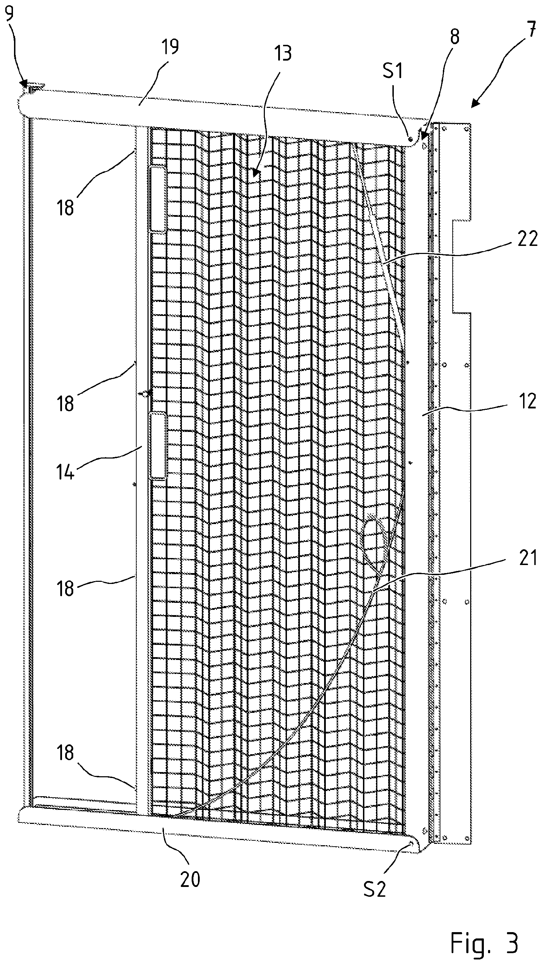

Die Figur 3 zeigt das Barrierenelement 13 in einer Zwischenposition. Die erfindungsgemäße Vorrichtung 7 wird gerade geöffnet, indem der Barrierenpfosten 14 von dem zweiten Rahmenpfosten 9 gelöst wurde. Es ist zu erkennen, dass an den Barrierenpfosten 14 Verriegelungselemente 18 in vier unterschiedlichen Höhenbereichen angeordnet sind. Sie können in der Schließstellung mit dem zweiten Rahmenpfosten 9 in formschlüssigen Eingriff gebracht werden.

Das Barrierenelement 13 wird oberseitig und unterseitig in einem oberen Rahmenteil 19 bzw. im Bereich der Schwelle angeordneten Rahmenteil 20 geführt. Die weiteren Rahmenteile 19, 20 sind über zwei Schwenkachsen S1, S2, die in Horizontalrichtung weisen, schwenkbeweglich mit dem ersten Rahmenpfosten 8 verbundenen.

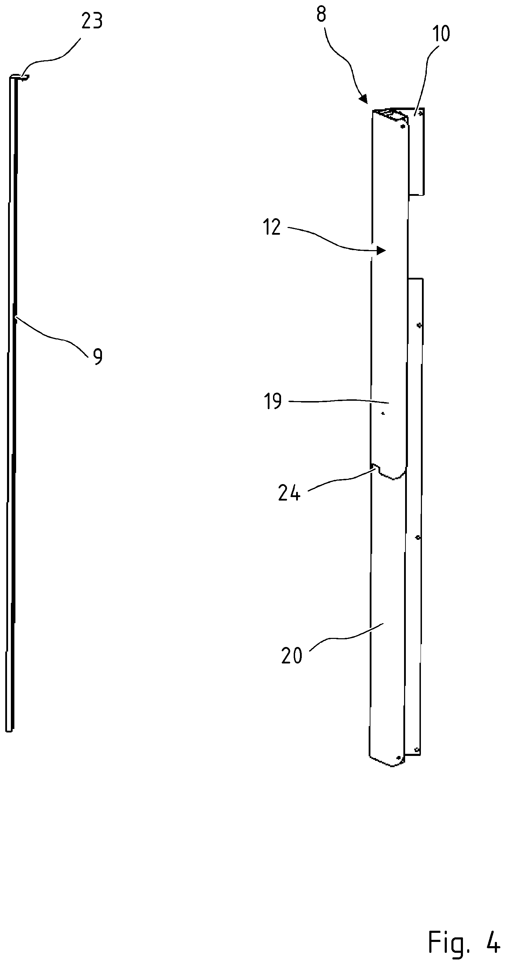

Wenn das Barrierenelement 13 in den Behälter 12 geschoben worden ist, wird der Behälter 12 geschlossen. Hierzu wird mittels einer seilförmigen Handhabe 21, die etwa im mittleren Bereich am unteren Rahmenteil 20 befestigt ist, das untere Rahmenteil 20 nach oben verschwenkt. Das obere Rahmenteil 19 wird von einem Hubzylinder 22 in der ausgefahrenen Position gehalten, auch wenn das Barrierenelement 13 eingefahren ist. Das obere Rahmenteil 19 wird anschließend ebenfalls nach unten geklappt. Diese Anordnung ist in der Figur 4 gezeigt. Das untere Rahmenteil 20 und das obere Rahmenteil 19 haben dabei eine doppelte Funktion. Sie sind einerseits als Führung konfiguriert und nehmen den Barrierenpfosten 14 mit seinen Enden und auch die Enden der Barriere 15 in sich auf. Gleichzeitig dient die Führung in der Figur 4 dargestellten Schließposition zur Ausbildung eines Behälters, in welchem das Barrierenelement 13 vollständig verstaut wird. Der so gebildete, verschwenkbare Behälter 12 wird in Richtung zu dem Befestigungsabschnitt 10 des Rahmenpfostens 8 verschwenkt. Dadurch wird der Durchgang komplett freigegeben. Der Behälter 12 des Rahmenpfosten 8 hat aufgrund des darin aufgenommenen Barrierenelements 13 ein größeres Bauvolumen, als der gegenüberliegende Rahmenpfosten 9, der funktional gewissermaßen ein Schließblech für die Verbindung mit dem Barrierenelement 13 ist.

An dem zweiten Rahmenpfosten 9 ist am oberen Ende ein Vorsprung 23 angeordnet, der dafür vorgesehen ist, mit einer Ausnehmung 24 am freien Ende des oberen Rahmenteils 19 in Eingriff zu gelangen, wie es in Figur 2 dargestellt ist. Auch das untere Rahmenteil 20 besitzt eine solche Ausnehmung, die allerdings in der perspektivischen Darstellung verdeckt ist. Auf die gleiche Art und Weise wird das untere Rahmenteil 20 gegenüber dem zweiten Rahmenpfosten 9 in der Offenstellung lagerorientiert.

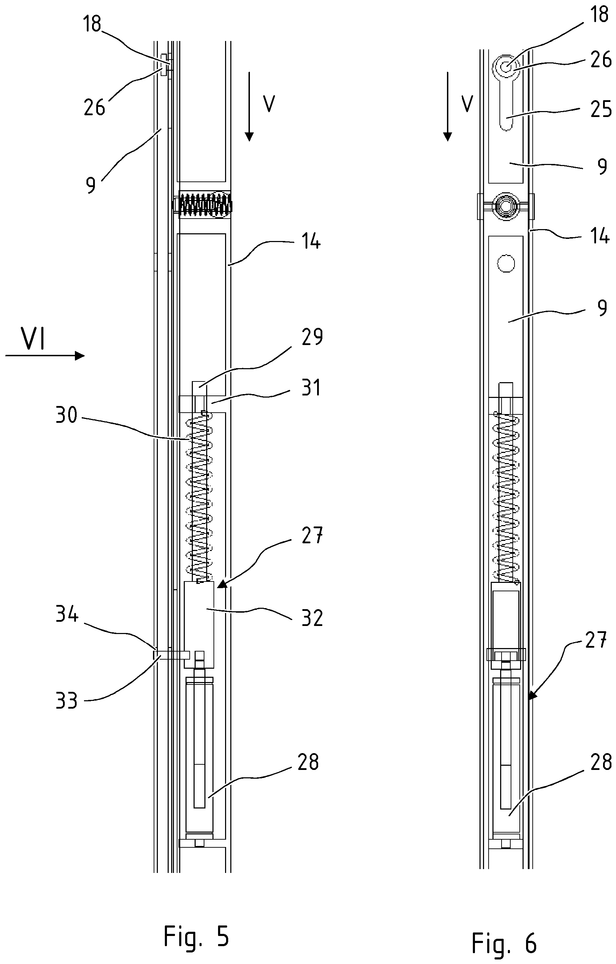

Die Figuren 5 und 6 sind gemeinsam zu betrachten. Figur 5 zeigt eine Schnittdarstellung durch einen mittleren Bereich des Rahmenpfostens 9 sowie des parallel und an dem Rahmenpfosten 9 anliegenden Barrierenpfostens 14. Die Figur 5 zeigt die Situation vor dem Verriegeln der beiden Pfosten. Der Barrierenpfosten 14 wird soweit an den Rahmenpfosten 9 herangeführt, dass die Verriegelungseinheit 18 in eine zugehörige Aussparung 25 am zweiten Rahmenpfosten 9 fasst. Das Verriegelungselement 18 ist als Zapfen mit im Durchmesser verdicktem Kopf 26 ausgebildet. Es handelt sich um eine Verbindung nach dem Typus einer Pilzkopfverriegelung. Die mehreren Verriegelungselemente 18 werden alle gleichzeitig mit dem zweiten Rahmenpfosten zunächst lose in Eingriff gebracht und anschließend durch eine Bewegung in Verriegelungsrichtung V nach unten bewegt.

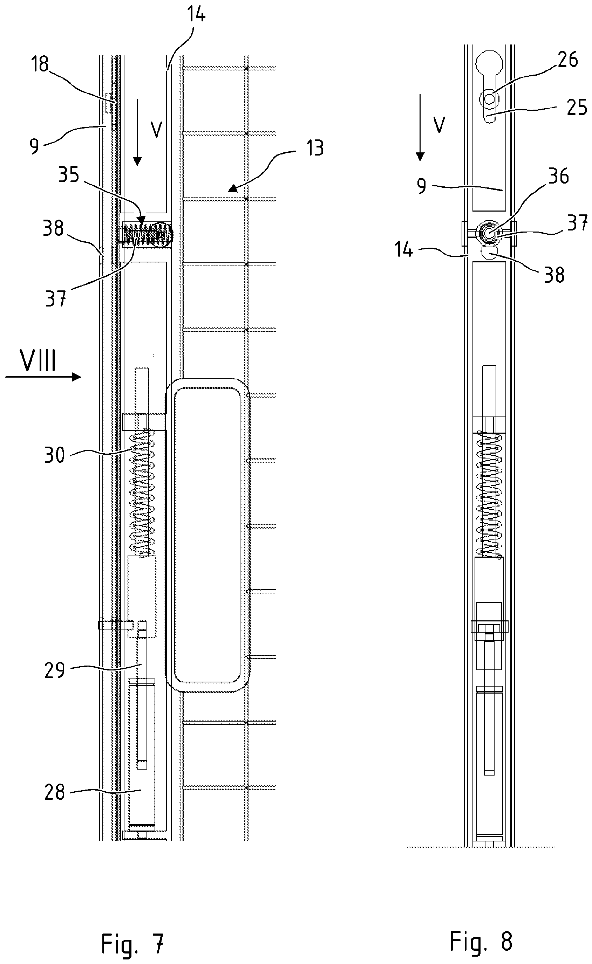

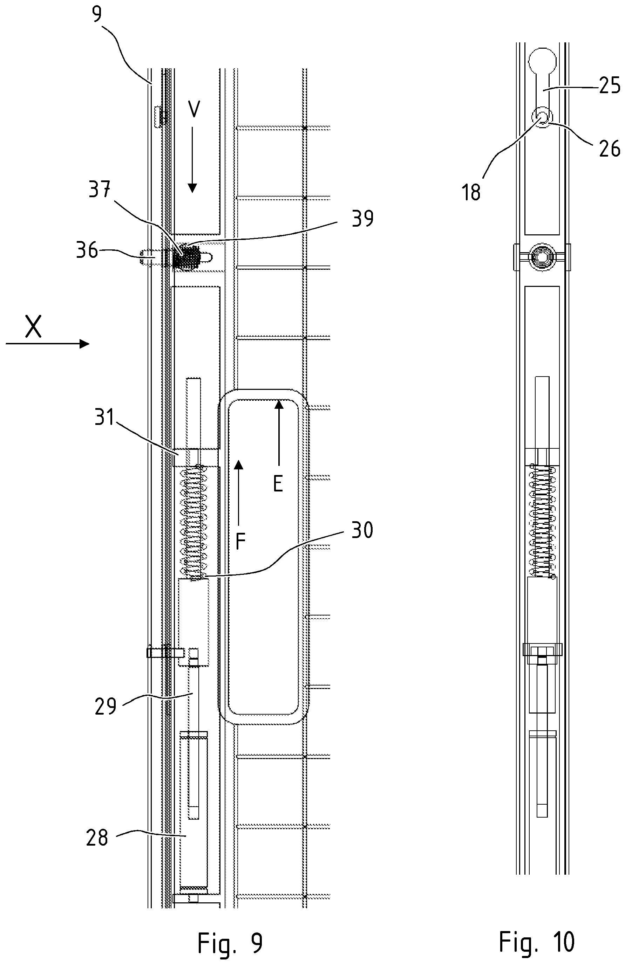

Die Verriegelungsrichtung V verläuft parallel zum Rahmenpfosten 9 und zum Barrierenpfosten 14. Dadurch hintergreift der Kopf 26 den schmaleren, schlitzförmigen Bereich der Aussparung 25. Das ist in den Figuren 7 und 8 bzw. 9 und 10 jeweils in zwei unterschiedlichen Ansichten dargestellt. Die Endposition ist in den Figuren 9 und 10 erreicht. Das ist die Verriegelungsstellung.

Auf dem Weg von der Ausgangsstellung gemäß der Figuren 5 und 6 in die Verriegelungsposition gemäß der Figuren 9 und 10 wird eine Verzögerungseinheit 27 vorgespannt. Die Verzögerungseinheit 27 umfasst in diesem Ausführungsbeispiel einen federbelasteten Dämpfungszylinder 28, der sich in Längsrichtung des Barrierenpfostens 14 erstreckt. Der Dämpfungszylinder 28 besitzt eine Kolbenstange 29, die innerhalb des Barrierenpfostens 14 linear geführt ist. Ein Federelement 30 ist dazu ausgebildet eine Federkraft F auf ein Widerlager 31 des Barrierenpfostens 14 auszuüben. Die Richtung der Federkraft F weist der Verriegelungsrichtung bzw.-kraft entgegen. Zwar stützt sich das Federelement 30 gleichzeitig auch an einem Stützkörper 32 ab, der mit der Kolbenstange 29 verbunden ist, allerdings wird das Federelement 30 durch die Bewegung des Barrierenpfostens 14 nach unten vorgespannt. Das Federelement 30 ist eine Druckfeder. Diese Vorspannkraft ist eine Folge der Bewegung in Verriegelungsrichtung V nach unten. Das Federelement 30 wird gestaucht. Für das Stauchen wird der Stützkörper 32, der an der Kolbenstange 29 befestigt ist, zusammen mit der Kolbenstange 29 aus dem Dämpfungszylinder 28 herausgezogen. Hierzu ist eine Rastnase 33 an dem Stützkörper 32 vorgesehen. Die Rastnase 33 steht quer vom Stützkörper 32 ab und greift in eine Ratsausnehmung 34 am zweiten Rahmenpfosten 9. Die Rastnase 33 befindet sich immer in der korrekten Position, wenn die beiden Pfosten miteinander verbunden werden sollen, da das Federelement 30 eine gewisse Vorspannkraft aufbringt und die Kolbenstange 29 immer wieder in die Ausgangsposition drückt, wie sie den Figuren 5 und 6 dargestellt ist. Es ist zu erkennen, dass der Kopf 26 den schmaleren Bereich der Aussparung 25 hintergreift. In dieser Position kann das Barrierenelement 13 bereits nicht mehr in Richtung zum ersten Rahmenpfosten 8 zurückgezogen werden. Es müsste wiederum nach oben in Richtung zu dem verbreiterten Bereich der schlüssellochförmigen Aussparung 25 verlagert werden. Die Kolbenstange 29 ist über einen ersten Teilbereich aus dem Dämpfungszylinder 28 herausgezogen worden. Das Federelement 30 in Form der Druckfeder ist teilweise vorgespannt worden.

Aus der Darstellung der Figuren 8 und 7 ist ferner zu erkennen, dass gleichzeitig mit der Verlagerung des Barrierenpfostens 14 in Richtung der Verriegelungsrichtung V nach unten gleichzeitig auch ein im Barrierenpfosten 14 angeordnetes Riegelelement 35 nach unten verlagert wird. Das Riegelelement 35 umfasst einen Riegel 36 (Figur 9), der von einer Druckfeder 37 umgeben ist und zunächst in einer eingefahrenen Position gehalten wird, d. h. nicht über die Längsseite des Rahmenpfostens 14 vorsteht. Er ist dafür vorgesehen, bei Erreichen der Endposition, wie sie in den Figuren 9 und 10 dargestellt ist, in eine Einrastöffnung 38 zu fassen, die in dem zweiten Rahmenpfosten 9 angeordnet ist. Der zweite Rahmenpfosten 9 ist aufgrund der notwendigen Hinterschneidung für den Kopf 26 des Verriegelungselements 18 doppelwandig ausgeführt, bzw. er besitzt einen Hohlraum. Die Einrastöffnung 38 erstreckt sich durch den Hohlraum und über beide parallel zueinander verlaufenden Wände des zweiten Rahmenpfostens 9.

Ist die Einraststellung erreicht worden, wird der Riegel 36 mittels eines Betätigungselements 39 manuell in die Einrastposition verschoben, wie sie in den Figuren 9 und 10 dargestellt ist. Nun kann der Bediener das Barrierenelement 13 loslassen, weil es in der eingerasteten Position verharrt. Es kann nicht entgegengesetzt der Verriegelungsrichtung V also in Entriegelungsrichtung E nach oben verlagert werden. Es kann auch nicht von dem zweiten Rahmenpfosten 9 gelöst werden, weil das Barrierenelement 13 über die Köpfe 26 der Verriegelungselemente 18 in den schlitzförmigen Bereichen der Aussparungen 25 gehalten ist. Das Federelement 30 ist nun maximal vorgespannt.

Zum Lösen des Barrierenelements 13 muss das Betätigungselement 39 betätigt werden, sodass die Feder 37 den Riegel 36 wieder in die Ausgangsposition zieht. Nun wirkt die Federkraft F auf das Widerlager 31 derart ein, dass das Barrierenelement 13 in der Bildebene nach oben entgegen der Verriegelungsrichtung V verlagert wird. Der Pfeil E bezeichnet die Entriegelungsrichtung E. Die Federkraft F und die Entriegelungsrichtung E haben dieselbe Wirkrichtung.

Allerdings wirkt der Dämpfungszylinder 28 der Einschubbewegung der Kolbenstange 29 entgegen. Der Kolben im Dämpfungszylinder 28 ist so konfiguriert, dass die Kolbenstange 29 zwar leicht herausgezogen werden kann, sodass das Barrierenelement 13 schnell geschlossen werden kann, allerdings wird eine Dämpfung durch eine Hydraulikflüssigkeit bewirkt, wenn die Kolbenstange 29 wieder in den Dämpfungszylinder 28 geschoben werden soll. Dies führt zu einer Zeitverzögerung der Bewegung in Entriegelungsrichtung E. Die Zeitverzögerung kann über die Viskosität und die Gestaltung des Kolbens innerhalb des Dämpfungszylinders 28 gesteuert werden. Die Verzögerungszeit beträgt mindestens 5 Sekunden. Wenn die Kolbenstange 29 wieder komplett eingefahren ist, wie es in den Figuren 5 und 6 dargestellt ist, befinden sich die Verriegelungselemente 18 mit ihrem verdicktem Kopf 26 wieder in dem verbreiterten Bereich der Aussparungen 25. Nunmehr kann das Barrierenelement 13 wieder zurückgezogen werden und die gesamte Vorrichtung geöffnet und verstaut werden.

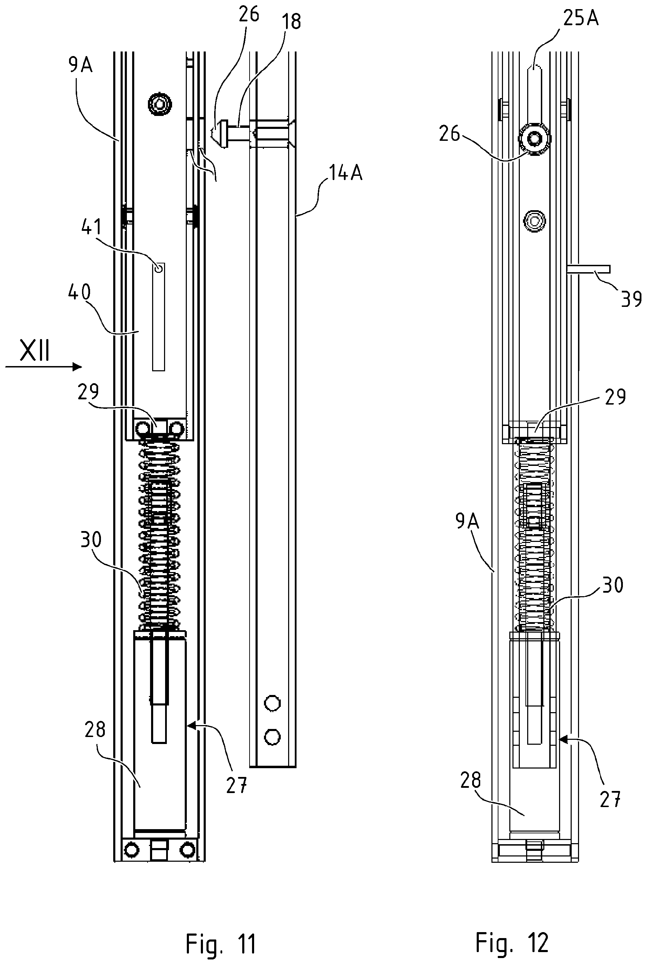

Eine weitere Ausführungsform ist in den Figuren 11 bis 16 dargestellt. Sie wird nachfolgend erläutert. Diese zweite Ausführungsform basiert weitestgehend auf der ersten Ausführungsform, wie sie in den Figuren 1 bis 4 dargestellt ist. Der wesentliche Unterschied ist die andere Anordnung der Verzögerungseinheit 27. Für im Wesentlichen identische Komponenten werden die in dem ersten Ausführungsbeispiel gemäß der Figuren 1 bis 10 genannten Bezugszeichen weiter verwendet.

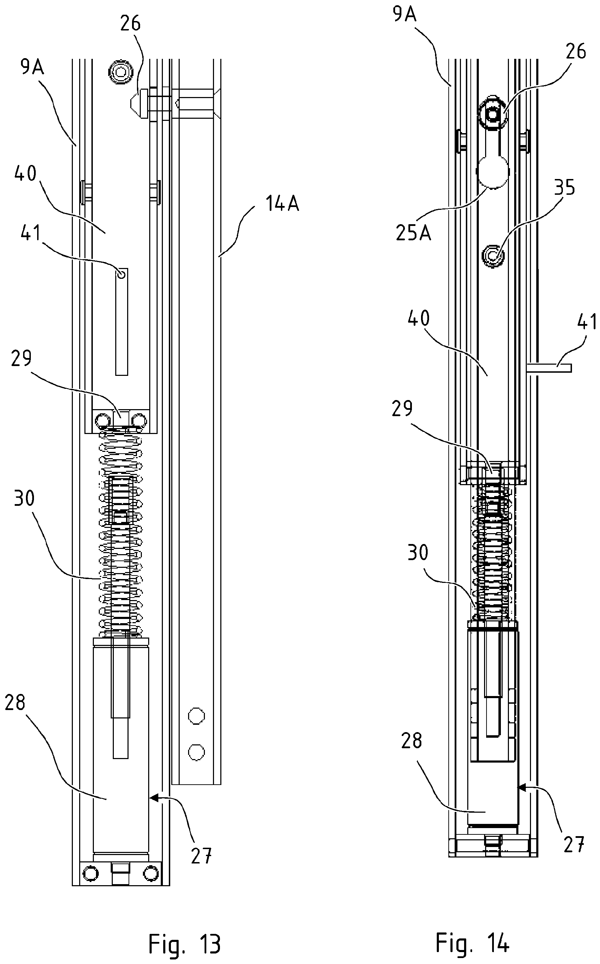

Die Figuren 11 und 12 sind gemeinsam zu betrachten. Figur 11 zeigt eine Schnittdarstellung durch einen mittleren Bereich eines zweiten Rahmenpfostens 9A sowie des parallel und dem zweiten Rahmenpfosten 9A gegenüberliegenden Barrierenpfostens 14A gemäß der zweiten Ausführungsform. Die Figur 13 zeigt die Situation vor dem Verriegeln der beiden genannten Pfosten. In der zweiten Ausführungsform ist innerhalb des hohlen zweiten Rahmenpfostens 9A ein Verschlusskörper 40 in Längsrichtung angeordnet. Der Verschlusskörper ist mit einer Kolbenstange 29 der Verzögerungseinheit 27 verbunden und weist ein Betätigungselement 41 auf. Mithilfe dieses Betätigungselementes 41 ist der Verschlusskörper parallel der Längsrichtung des zweiten Rahmenpfostens 9A verschiebbar. Der Barrierenpfosten 14A wird zum Verriegeln soweit an den zweiten Rahmenpfosten 9A herangeführt, dass die Verriegelungseinheit 18 in eine zugehörige Aussparung 25 am zweiten Rahmenpfosten 9A und eine zugehörige Aussparung 25A in dem Verschlusskörper 40 fasst. Die Verriegelungsrichtung V verläuft parallel zum Rahmenpfosten 9A und zum Barrierenpfosten 14A. Das Verriegelungselement 18 ist als Zapfen mit im Durchmesser verdicktem Kopf 26 ausgebildet. Es handelt sich um eine Verbindung nach dem Typus einer Pilzkopfverriegelung. Das Verriegelungselement 18 wird mit dem Verschlusskörper 40 zunächst lose in Eingriff gebracht. Anschließend wird das Verriegelungselement 18 durch eine Bewegung des Verschlusskörpers 40 in Verriegelungsrichtung V, welche mithilfe des Betätigungselementes 41 an dem Verschlusskörper 40 ausgeführt wird, hinter den schlitzförmigen Bereich der Aussparung 25A positioniert. Dadurch hintergreift der Kopf 26 den schmaleren, schlitzförmigen Bereich der Aussparung 25A. Das ist in der Figur 14 dargestellt, in welcher die Verriegelungsposition erreicht wird.

Auf dem Weg von der Ausgangsstellung gemäß der Figur 13 in die Verriegelungsposition gemäß der Figur 14 wird eine Verzögerungseinheit 27 vorgespannt. Die Verzögerungseinheit 27 umfasst in diesem Ausführungsbeispiel einen federbelasteten Dämpfungszylinder 28, der sich in Längsrichtung des zweiten Rahmenpfostens 9A erstreckt. Der Dämpfungszylinder 28 besitzt die Kolbenstange 29, die sich in Längsrichtung innerhalb des zweiten Rahmenpfostens 9A bewegt. Ein Federelement 30 ist dazu ausgebildet, eine Federkraft F auf den Verschlusskörper 40 innerhalb des zweiten Rahmenpfostens 9A auszubilden. Die Richtung der Federkraft F weist der Verriegelungsrichtung bzw.-kraft entgegen. Zwar stützt sich das Federelement 30 gleichzeitig auch dem Druckzylinder 28 ab, der mit der Kolbenstange 29 verbunden ist, allerdings wird das Federelement 30 durch die Bewegung des Verschlusskörpers 40 nach unten vorgespannt. Das Federelement 30 ist eine Druckfeder. Diese Vorspannkraft ist eine Folge der Bewegung in Verriegelungsrichtung V nach unten. Das Federelement 30 wird gestaucht. Für das Stauchen wird der Verschlusskörper 40, der mit der Kolbenstange 29 verbunden ist, nach unten geführt, wodurch die Kolbenstange in den Dämpfungszylinder geführt wird. Es ist zu erkennen, dass der Kopf 26 des Verriegelungselementes 18 in dieser Position den schmaleren Bereich der Aussparung 25 hintergreift. So kann das Barrierenelement 13 bereits nicht mehr in Richtung zum ersten Rahmenpfosten 8 zurückgezogen werden. Die Kolbenstange 29 ist in den Dämpfungszylinder 28 geführt worden. Das Federelement 30 in Form der Druckfeder ist vorgespannt (Figur 14). Der Verschlusskörper 40 müsste zum Öffnen nach oben verlagert werden, sodass der verbreiterte Teil der Aussparung 25A wieder in Höhe des Kopfes 26 liegt.

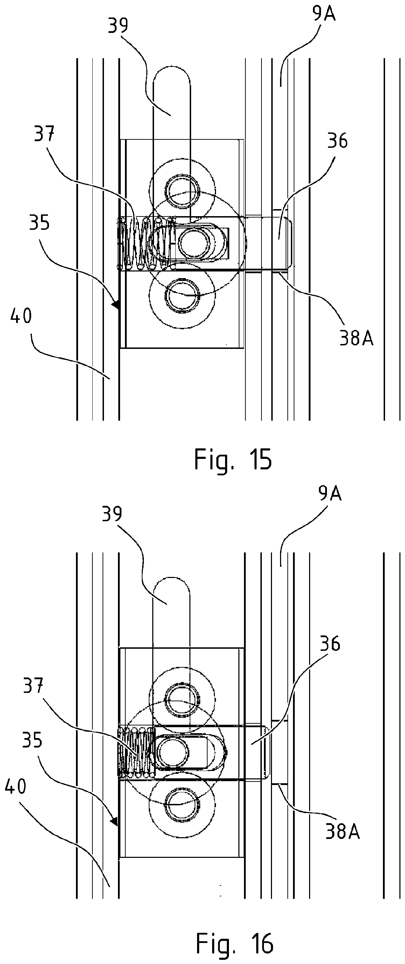

Gleichzeitig mit der Verlagerung des Verschlusskörpers in Richtung der Verriegelungsrichtung V nach unten wird auch ein im Verschlusskörper 40 angeordnetes Riegelelement 35 nach unten verlagert. Das Riegelelement 35 umfasst einen Riegel 36, der von einer Druckfeder 37 umgeben ist (Figuren 15,16). Zunächst wird der Riegel 36 durch den Kontakt mit dem der Innenwand des hohlen Rahmenpfostens 9A in einer eingefahrenen Position gehalten wird, d. h. er steht nicht über die Längsseite des Verschlusskörpers 40 hervor. Die Druckfeder ist in dieser Position vorgespannt. Der Riegel 36 ist dafür vorgesehen, bei Erreichen der Endposition, wie sie in den Figuren 14 und 15 dargestellt ist, in eine Einrastöffnung 38A zu fassen, die in der Wand des zweiten Rahmenpfostens 9A angeordnet ist. Ist der Riegel 36 eingerastet, kann der Bediener das Betätigungselement 41 an dem Verschlusskörper 40 loslassen, weil dieser in der eingerasteten Position verharrt. Er kann nicht entgegengesetzt der Verriegelungsrichtung V also in Entriegelungsrichtung E nach oben verlagert werden. Das Barrierenelement 13 kann in dieser Position auch nicht von dem zweiten Rahmenpfosten 9A gelöst werden, weil das Barrierenelement 13 über die Köpfe 26 der Verriegelungselemente 18 in den schlitzförmigen Bereichen der Aussparungen 25 gehalten ist. Das Federelement 30 ist nun maximal vorgespannt.

Zum Lösen des Barrierenelements 13 muss das Betätigungselement 39 betätigt werden, sodass die Feder 37 den Riegel 36 wieder in die Ausgangsposition zieht, (Figur 16). Nun wirkt die Federkraft F derart auf den Verschlusskörper 40 ein, dass dieser in der Bildebene nach oben entgegen der Verriegelungsrichtung V verlagert wird. Der Pfeil E bezeichnet die Entriegelungsrichtung E. Die Federkraft F und die Entriegelungsrichtung E haben dieselbe Wirkrichtung.

Allerdings wirkt der Dämpfungszylinder 28 der Auszugbewegung der Kolbenstange 29 entgegen. Der Kolben im Dämpfungszylinder 28 ist so konfiguriert, dass die Kolbenstange 29 zwar leicht hineingedrückt werden kann, sodass das Barrierenelement 13 schnell geschlossen werden kann, allerdings wird eine Dämpfung durch eine Hydraulikflüssigkeit bewirkt, wenn die Kolbenstange 29 wieder aus dem Dämpfungszylinder 28 gezogen werden soll. Dies führt zu einer Zeitverzögerung der Bewegung in Entriegelungsrichtung E. Die Zeitverzögerung kann über die Viskosität und die Gestaltung des Kolbens innerhalb des Dämpfungszylinders 28 gesteuert werden. Die Verzögerungszeit beträgt mindestens 5 Sekunden. Wenn sich die Kolbenstange 29 wieder in der Entriegelungsposition befindet, wie es in der Figur 13 dargestellt ist, befinden sich die Verriegelungselemente 18 mit ihrem verdickten Köpfen 26 wieder in den verbreiterten Bereichen der Aussparungen 25A. Nunmehr kann das Barrierenelement 13 wieder zurückgezogen werden und die gesamte Vorrichtung geöffnet und verstaut werden.

### Bezugszeichen:

- 1 -: Flugzeug
- 2 -: Cockpit
- 3 -: Cockpittür
- 4 -: Durchgang
- 5 -: WC-Raum
- 6 -: Bordküche
- 7 -: Vorrichtung zum Verhindern des Zutritts
- 8 -: erster Rahmenpfosten
- 9 -: zweiter Rahmenpfosten
- 9A -: zweiter Rahmenpfosten
- 10 -: Befestigungsabschnitt von 8
- 11 -: Gelenk von 8
- 12 -: Behälter an 8
- 13 -: Barrierenelement
- 14 -: Barrierenpfosten
- 14A -: Barrierenpfosten
- 15 -: Barriere
- 16 -: Handgriff
- 17 -: Durchgrifföffnung
- 18 -: Verriegelungselement
- 19 -: oberes Rahmenteil
- 20 -: unteres Rahmenteil
- 21 -: Handhabe an 20
- 22 -: Hubzylinder an 19
- 23 -: Vorsprung
- 24 -: Ausnehmung
- 25 -: Aussparung in 9
- 25A -: Aussparung in 40
- 26 -: Kopf von 18
- 27 -: Verzögerungseinheit
- 28 -: Dämpfungszylinder
- 29 -: Kolbenstange von 28
- 30 -: Federelement
- 31 -: Widerlager an 14
- 32 -: Stützkörper an 29
- 33 -: Rastnase
- 34 -: Rastausnehmung
- 35 -: Riegelelement
- 36 -: Riegel von 35
- 37 -: Feder von 35
- 38 -: Einrastöffnung für 36 in 9
- 38A -: Einrastöffnung für 36 in 14A
- 39 -: Betätigungselement
- 40 -: Verschlusskörper
- 41 -: Betätigungselement an 40

- E-: Entriegelungsrichtung
- F -: Federkraft
- S1 -: Schwenkachse
- S2 -: Schwenkachse
- V -: Verriegelungsrichtung

## Patentansprüche

1. Vorrichtung zum Verhindern des Zutritts zu einem Bereich eines Flugzeuges, mit einem ersten senkrechten Rahmenpfosten (8) und mit einem zweiten senkrechten Rahmenpfosten (9, 9A) zur Befestigung an einer Struktur des Flugzeuges und mit einem Barrierenelement (13), das mit dem ersten Rahmenpfosten (8) verlagerbar verbunden und mit dem zweiten Rahmenpfosten (9, 9A) über wenigstens ein Verriegelungselement (18) lösbar verbindbar ist, um den Zutritt zu dem zu schützenden Bereich zu verhindern, wobei eine Verzögerungseinheit (27) dazu ausgebildet ist, das Verriegelungselement (18) nach einer Zeitverzögerung freizugeben, **dadurch gekennzeichnet, dass** die Verzögerungseinheit (27) einen federbelasteten Dämpfungszylinder (28) aufweist, der durch eine Verriegelungsbewegung (V) gegen eine Federkraft (F) in eine Dämpfungsposition verlagerbar ist.

2. Vorrichtung nach Anspruch 1, **dadurch gekennzeichnet, dass** die Verzögerungseinheit (27) in dem Barrierenelement (13) angeordnet ist.

3. Vorrichtung nach Anspruch 1 oder 2, **dadurch gekennzeichnet, dass** die Verzögerungseinheit (27) beim Verriegeln mit einer Rastausnehmung (34) am zweiten Rahmenpfosten (9) in Eingriff steht.

4. Vorrichtung nach einem der Ansprüche 1 bis 3, **dadurch gekennzeichnet, dass** das Barrierenelement (13) durch ein zwischen dem Barrierenelement (13) und dem zweiten Rahmenpfosten (9) wirksames Riegelelement (35) in der Verriegelungsstellung arretierbar ist.

5. Vorrichtung nach einem der Ansprüche 1 bis 4, **dadurch gekennzeichnet, dass** das Barrierenelement (13) eine flexible Barriere (15) und einen starren Barrierenpfosten (14) aufweist, an welchem das wenigstens eine Verriegelungselement (18) angeordnet ist und in welchem die Verzögerungseinheit (17) angeordnet ist.

6. Vorrichtung nach einem der Ansprüche 1 bis 5, **dadurch gekennzeichnet, dass** der Barrierenpfosten (14) in seinem Fußbereich eine hervorstehende Konsole aufweist für eine Verriegelungsbewegung (V) mittels Fußbetätigung.

7. Vorrichtung nach Anspruch 1, **dadurch gekennzeichnet, dass** die Verzögerungseinheit (27) in dem zweiten Rahmenpfosten (9A) angeordnet ist.

8. Vorrichtung nach Anspruch 7, **dadurch gekennzeichnet, dass** die Verzögerungseinheit (27) mit einem Verschlusskörper (40) verbunden ist, wobei der Verschlusskörper (40) in dem zweiten Rahmenpfosten (9A) in Längsrichtung des Rahmenpfostens (9A) verschieblich angeordnet ist, wobei der Verschlusskörper (40) ein Betätigungselement (41) aufweist, um den Verschlusskörper (40) manuell zu verschieben.

9. Vorrichtung nach Anspruch 8, **dadurch gekennzeichnet, dass** der Verschlusskörper (40) durch ein zwischen dem Verschlusskörper (40) und dem zweiten Rahmenpfosten (9A) wirksames Riegelelement (35) in der Verriegelungsstellung arretierbar ist.

10. Vorrichtung nach einem der Ansprüche 7 bis 9, **dadurch gekennzeichnet, dass** das Barrierenelement (13) eine flexible Barriere (15) und einen starren Barrierenpfosten (14A) aufweist, an welchem das wenigstens eine Verriegelungselement (18) angeordnet ist.

11. Vorrichtung nach einem der Ansprüche 1 bis 10, **dadurch gekennzeichnet, dass** die Verriegelungsbewegung (V) parallel zum zweiten Rahmenpfosten (9, 9A) ist.

12. Vorrichtung nach einem der Ansprüche 1 bis 11, **dadurch gekennzeichnet, dass** das wenigstens eine Verriegelungselement (18) nach dem Prinzip einer Pilzkopfverriegelung in der Schließstellung in eine Schließöffnung eingehakt ist.

13. Vorrichtung nach einem der Ansprüche 1 bis 12, **dadurch gekennzeichnet, dass** an dem ersten Rahmenpfosten (8) ein Rahmenoberteil (19) angeordnet ist, das nach oben in Richtung zum zweiten Rahmenpfosten (9, 9A) verschwenkbar ist.

14. Vorrichtung nach Anspruch 13, **dadurch gekennzeichnet, dass** das Rahmenoberteil (19) mit dem zweiten Rahmenpfosten (9, 9A) koppelbar ist.

15. Vorrichtung nach einem der Ansprüche 1 bis 14, **dadurch gekennzeichnet, dass** an dem ersten Rahmenpfosten (8) ein Rahmenunterteil (20) angeordnet ist, das nach unten in Richtung zum zweiten Rahmenpfosten (9, 9A) verschwenkbar ist.

16. Vorrichtung nach Anspruch 15, **dadurch gekennzeichnet, dass** das Rahmenunterteil (20) mit dem zweiten Rahmenpfosten (9, 9A) koppelbar ist.

17. Vorrichtung nach einem der Ansprüche 13 bis 16, **dadurch gekennzeichnet, dass** die Barriere (15) in dem Rahmenunterteil (20) und/oder in dem Rahmenoberteil (19) geführt ist.

18. Vorrichtung nach einem der Ansprüche 13 bis 17, **dadurch gekennzeichnet, dass** das Rahmenoberteil (19) mit einen Hubzylinder (22) verbunden ist, welcher eine Kraft auf das Rahmenoberteil (19) ausübt, um es in einer Offenstellung zu halten.

19. Vorrichtung nach einem der Ansprüche 1 bis 18, **dadurch gekennzeichnet, dass** der erste Rahmenpfosten (8) einen Behälter (12) aufweist, in welchem die Barriere (15) bei Nichtgebrauch angeordnet ist.

20. Vorrichtung nach Anspruch 19, **dadurch gekennzeichnet, dass** der Behälter (12) um eine Vertikalachse schwenkbar an dem ersten Rahmenpfosten (8) gelagert ist.

## Claims

1. Device for preventing access to an area of an aircraft, having a first vertical frame post (8) and a second vertical frame post (9, 9A) for attachment to a structure of the aircraft, and having a barrier element (13) which is displaceably connected to the first frame post (8) and can be detachably connected to the second frame post (9, 9A) via at least one latching element (18) in order to prevent access to the area to be protected, wherein a delay unit (27) is designed to release the latching element (18) after a time delay, **characterised in that** the delay unit (27) has a spring-loaded damping cylinder (28) which is displaceable into a damping position by a latching movement (V) in opposition to a spring force (F).

2. Device according to claim 1, **characterised in that** the delay unit (27) is arranged in the barrier element (13).

3. Device according to claim 1 or 2, **characterised in that** the delay unit (27) engages with a detent recess (34) on the second frame post (9) during latching.

4. Device according to any one of claims 1 to 3, **characterised in that** the barrier element (13) can be locked in the latching position by a locking element (35) acting between the barrier element (13) and the second frame post (9).

5. Device according to any one of claims 1 to 4, **characterised in that** the barrier element (13) has a flexible barrier (15) and a rigid barrier post (14) on which the at least one latching element (18) is arranged and in which the delay unit (17) is arranged.

6. Device according to any one of claims 1 to 5, **characterised in that** the barrier post (14) has a protruding bracket in its foot area for a latching movement (V) by means of foot actuation.

7. Device according to claim 1, **characterised in that** the delay unit (27) is arranged in the second frame post (9A).

8. Device according to claim 7, **characterised in that** the delay unit (27) is connected to a closure body (40), wherein the closure body (40) is arranged for displacement in the second frame post (9A) in a longitudinal direction of the frame post (9A), wherein the closure body (40) has an actuating element (41) for manually displacing the closure body (40).

9. Device according to claim 8, **characterised in that** the closure body (40) can be locked in the latching position by a locking element (35) acting between the closure body (40) and the second frame post (9A).

10. Device according to any one of claims 7 to 9, **characterised in that** the barrier element (13) has a flexible barrier (15) and a rigid barrier post (14A) on which the at least one latching element (18) is arranged.

11. Device according to any one of claims 1 to 10, **characterised in that** the latching movement (V) is parallel to the second frame post (9, 9A).

12. Device according to any one of claims 1 to 11, **characterised in that** the at least one latching element (18) is hooked into a closing opening in the closed position according to the principle of a mushroom head lock.

13. Device according to any one of claims 1 to 12, **characterised in that** on the first frame post (8) an upper frame part (19) is arranged which can be pivoted upwards in the direction of the second frame post (9, 9A).

14. Device according to claim 13, **characterised in that** the upper frame part (19) can be coupled to the second frame post (9, 9A).

15. Device according to any one of claims 1 to 14, **characterised in that** on the first frame post (8) a lower frame part (20) is arranged which can be pivoted downwards in the direction of the second frame post (9, 9A).

16. Device according to claim 15, **characterised in that** the lower frame part (20) can be coupled to the second frame post (9, 9A).

17. Device according to any one of claims 13 to 16, **characterised in that** the barrier (15) is guided in the lower frame part (20) and/or in the upper frame part (19).

18. Device according to any one of claims 13 to 17, **characterised in that** the upper frame part (19) is connected to a lifting cylinder (22) which exerts a force on the upper frame part (19) in order to hold the latter in an open position.

19. Device according to any one of claims 1 to 18, **characterised in that** the first frame post (8) has a container (12) in which the barrier (15) is arranged when not in use.

20. Device according to claim 19, **characterised in that** the container (12) is mounted on the first frame post (8) so as to be pivotable about a vertical axis.

## Revendications

1. Dispositif d'empêchement de l'accès à une zone d'un avion, avec un premier montant de châssis (8) perpendiculaire et avec un second montant de châssis (9, 9A) perpendiculaire pour la fixation à une structure de l'avion et avec un élément barrière (13) qui est relié de manière déplaçable au premier montant de châssis (8) et peut être relié de manière amovible au second montant de châssis (9, 9A) par le biais d'au moins un élément de verrouillage (18) afin d'empêcher l'accès à la zone à protéger, dans lequel une unité de temporisation (27) est réalisée afin de libérer l'élément de verrouillage (18) après un temps de retard, **caractérisé en ce que** l'unité de temporisation (27) présente un cylindre d'amortissement (28) sollicité par ressort qui est déplaçable dans une position d'amortissement par un mouvement de verrouillage (V) contre une force de ressort (F).

2. Dispositif selon la revendication 1, **caractérisé en ce que** l'unité temporisation (27) est agencée dans l'élément barrière (13).

3. Dispositif selon la revendication 1 ou 2, **caractérisé en ce que** l'unité de temporisation (27) est en prise lors du verrouillage avec un évidement d'encliquetage (34) au niveau du second montant de châssis (9).

4. Dispositif selon l'une quelconque des revendications 1 à 3, **caractérisé en ce que** l'élément barrière (13) peut être arrêté dans la position de verrouillage par un élément de verrou (35) actif entre l'élément barrière (13) et le second montant de châssis (9).

5. Dispositif selon l'une quelconque des revendications 1 à 4, **caractérisé en ce que** l'élément barrière (13) présente une barrière (15) flexible et un montant de barrière (14) rigide au niveau duquel le au moins un élément de verrouillage (18) est agencé et dans lequel l'unité de temporisation (17) est agencée.

6. Dispositif selon l'une quelconque des revendications 1 à 5, **caractérisé en ce que** le montant de barrière (14) présente dans sa zone de pied une console en saillie pour un mouvement de verrouillage (V) par un actionnement au pied.

7. Dispositif selon la revendication 1, **caractérisé en ce que** l'unité de temporisation (27) est agencée dans le second montant de châssis (9A).

8. Dispositif selon la revendication 7, **caractérisé en ce que** l'unité de temporisation (27) est reliée à un corps de fermeture (40), dans lequel le corps de fermeture (40) est agencé de manière mobile dans le second montant de châssis (9A) dans le sens longitudinal du montant de châssis (9A), dans lequel le corps de fermeture (40) présente un élément d'actionnement (41) afin de déplacer manuellement le corps de fermeture (40).

9. Dispositif selon la revendication 8, **caractérisé en ce que** le corps de fermeture (40) peut être arrêté dans la position de verrouillage par un élément de verrou (35) actif entre le corps de fermeture (40) et le second montant de châssis (9A).

10. Dispositif selon l'une quelconque des revendications 7 à 9, **caractérisé en ce que** l'élément barrière (13) présente une barrière (15) flexible et un montant de barrière (14A) rigide au niveau duquel le au moins un élément de verrouillage (18) est agencé.

11. Dispositif selon l'une quelconque des revendications 1 à 10, **caractérisé en ce que** le mouvement de verrouillage (V) est parallèle au second montant de châssis (9, 9A).

12. Dispositif selon l'une quelconque des revendications 1 à 11, **caractérisé en ce que** le au moins un élément de verrouillage (18) est accroché dans une ouverture de fermeture dans la position de fermeture selon le principe d'un verrouillage de tête de champignon.

13. Dispositif selon l'une quelconque des revendications 1 à 12, **caractérisé en ce qu'**une partie supérieure de châssis (19) est agencée au niveau du premier montant de châssis (8), partie qui peut être pivotée vers le haut en direction du second montant de châssis (9, 9A).

14. Dispositif selon la revendication 13, **caractérisé en ce que** la partie supérieure de châssis (19) peut être couplée au second montant de châssis (9, 9A).

15. Dispositif selon l'une quelconque des revendications 1 à 14, **caractérisé en ce qu'**une partie inférieure de châssis (20) est agencée au niveau du premier montant de châssis (8), partie qui peut être pivotée vers le bas en direction du second montant de châssis (9, 9A).

16. Dispositif selon la revendication 15, **caractérisé en ce que** la partie inférieure de châssis (20) peut être couplée au second montant de châssis (9, 9A).

17. Dispositif selon l'une quelconque des revendications 13 à 16, **caractérisé en ce que** la barrière (15) est guidée dans la partie inférieure de châssis (20) et/ou dans la partie supérieure de châssis (19).

18. Dispositif selon l'une quelconque des revendications 13 à 17, **caractérisé en ce que** la partie supérieure de châssis (19) est reliée à un cylindre de levage (22) qui exerce une force sur la partie supérieure de châssis (19) afin de maintenir cette dernière dans une position d'ouverture.

19. Dispositif selon l'une quelconque des revendications 1 à 18, **caractérisé en ce que** le premier montant de châssis (8) présente un récipient (12) dans lequel la barrière (15) est agencée en cas de non utilisation.

20. Dispositif selon la revendication 19, **caractérisé en ce que** le récipient (12) est logé de manière pivotante autour d'un axe vertical au niveau du premier montant de châssis (8).
